# EUROPEAN PATENT APPLICATION

(11) **EP 1 122 560 A1**
(43) Date of publication of application: **08.08.2001**
(21) Application number: 00949921.1
(22) Date of filing: 27.07.2000
(51) Int. Cl.: G02B 5/20

(54) **METHOD FOR MANUFACTURING COLOR FILTER, COLOR FILTER, AND LIQUID CRYSTAL DEVICE**

(30) Priority: 28.07.1999 JP 21391299
(71) Applicant: MATSUSHITA ELECTRIC INDUSTRIAL CO., LTD., Kadoma-shi, Osaka 571-8501 (JP)
(72) Inventor: BANDO, Katsuhiko, Niihama-shi Ehime 792-0050 (JP); SONE, Koji, Niihama-shi Ehime 792-0060 (JP); TAKAHASHI, Tsuyoshi, Niihama-shi Ehime 792-0045 (JP); MATSUZAKI, Naoki, Saijo-shi Ehime 793-0046 (JP); TOKUNO, Yasunori, Syuso-gun, Ehime 799-1106 (JP); KAWANO, Takumi, Niihama-shi, Ehime 792-0050 (JP)
(74) Representative: Eisenführ, Speiser & Partner
(86) International application number: JP0005006
(87) International publication number: WO0107941

(57) **Abstract**

The present invention relates to a color filter manufacturing method employing an ink jet system, a color filter manufactured according to the manufacturing method, and a liquid crystal employing the color filter. A black resist layer (2) and a novolak resin negative resist layer (3) are formed sequentially on a transparent non-alkali glass substrate with its surface polished, the negative resist (3) is patterned into frames (2a, 3a) by a photolithography method, so as to form an ink filling area (4), red ink R, green ink G, or blue ink B having 20 weight percent or more of solid content ratio fills in the ink filling area (4) by employing an ink jet head, and then a solvent of ink is evaporated, and the solid content in ink is solidified.

## Description

### TECHNICAL FIELD

The present invention relates to a color filter employed for a liquid crystal display panel or the like, a color filter manufacturing method, and a liquid crystal element being provided with the color filter.

### BACKGROUND ART

In recent years, demand for a liquid crystal display, particularly, for a color liquid crystal display is increasing with the development of personal computers, particularly, that of portable personal computers. However, for a further diffusion, it is required to perform a cost down and, particularly, that for a color filter which has a high weight in view of cost.

As major color filter manufacturing methods, there are a printing method, an electrodeposition method, a staining method, or a pigment dispersion method. Hereinafter, the respective methods will be described.

The printing method is one in which a paint having pigments dispersed therein are pasted on a thermosetting resin in three colors of red (R), green (G), and blue (B) by repeated printing, and resin as a colored layer is subjected to heating and curing, thereby to form a colored layer in. The printing method has simple processing steps but is deteriorated in resolution and flatness.

The electrodeposition method is the one in which a transparent electrode is patterned on a substrate, and it is soaked in electropaint liquid including pigment, resin, electrolyte, or the like, so that first color is electrodeposited. The process is repeated three times to form colored layers of R, G, and B, and finally burning is performed. Though this electrodeposision method is excellent in flatness, it has a failure that patterns formed are restricted.

The staining method is one in which water-soluble polymeric material as a material for staining is added with sensitizing agent to be sensitized, and this sensitized material is patterned into a desired form on a glass substrate by a photolithography process, and the obtained pattern is soaked in a staining bath, thereby to obtain a colored pattern. This process is repeated three times to form colored layers of three colors of R, G, and B. This staining method achieves sharpness in color, but is inferior in resistances to weather, light, and heat, as well as in hygroscopicity.

Finally, the pigment dispersing method is one in which pigment-dispersed photosensitive resin layer is formed on a substrate, and this is patterned to obtain a monochromatic pattern. This process is repeated three times to form colored layers of three colors of R, G, and B. The pigment dispersing method has a problem in material loss because 70% or more of the applied material is disposed of at the patterning.

It is common through these methods in that the same process should be performed three times to form three colors of R, G, and B, thereby necessarily resulting in a high cost as well as resulting in as a lowered yield as larger the number of processes is.

To solve the above-mentioned problems, disclosed in Japanese Published Patent Application No.Sho.59-75205, 63-235901, No.Hei.1-217302, 4-123005, and 7-146406 are color filter manufacturing methods employing an ink jet system.

These methods are those which are different from the above-described conventional method in that coloring liquid (hereinafter referred to as ink) including each pigment of R, G, or B is discharged from nozzles onto a filter substrate, and the ink is dried on the filter substrate to form a colored layer. According to this method, forming of the respective colored layers of R, G, and B can be carried out all at once, and further, there is no waste in the coloring liquid quantity used, thereby resulting in effects of a substantial increase in productivity, a cost reduction and the like can be expected.

As methods to form a color filter employing the ink jet system, a method to pigment colored parts of the color filter with ink of respective colors directly, and a method to form an ink acceptance layer and stain it afterwards have been offered. However, these conventional methods have the problems below.

First, in the method of pigmenting directly, water-base ink of low viscosity of nearly 1-3cps is employed in the conventional ink jet system, considering the discharge stability of a head. Therefore, only about a few weight percent to over ten weight percent of solid content quantity in the ink can be included regardless of color material being colorant or pigment, whereby the thickness of the ink after being dried, that is, the thickness of the colored layer is nearly several tenth parts of that before being dried. Thereby, in order to obtain the colored layer of enough thickness satisfying color characteristics of the color filter, ink with the volume several-tens times as large as that of the colored layer should be poured. Accordingly, there is a need that frames of an ink filling area for holding liquid ink are several-tens times as high as the colored layer; however, the difference in level between the frames and the colored layer is too large after drying step, whereby enough flatness cannot be obtained, resulting in a problem in a subsequent process of manufacturing liquid crystal element.

To solve the above-described problem, methods in which the frames are made ink repellent and the needful amount of ink is held by the low frames by keeping convex ink meniscus are offered in Japanese Published Patent Application No. Hei. 7-35915, 7-84122, and the like. However, in these methods, ink is repelled also in the side of the frames since the entire frames have the ink repellency, and therefore, there is a case in which ink is not permeated enough into the sidewall, occurring decolorising when conventional water-base ink is employed. Moreover, variations in form and in ink repellency of the frames when being patterned, and residue of the ink repellent material may be easily generated in the colored part partitioned by the frames, resulting in a problem in patterning on particularly a large-area substrate.

Further, in Japanese Published Patent Application No.Hei.9-127327 and 9-203803, for example, which improve the method of ink repellency processing of the frame as described above, methods are disclosed in which the top surface of the frame is made ink repellent while the sidewall and the substrate surface is not ink repellent so that ink fills in the colored part partitioned by the frames uniformly. According to this method, while an improvement in decolorising prevention is attempted, variations in form and ink repellency of the frames when being patterned, the residue of the ink repellent material in the colored part partitioned by the frames, and variations when patterning on a large-area substrate occur similarly, whereby it is a big problem to control the convex ink meniscus, which is more than several times as high as the frame, uniformly in whole.

Meanwhile, the method of performing staining to the ink acceptance layer also employs a low viscosity water-base ink in consideration of the discharge stability of the head as the direct coloring method, the solid content quantity in the water-base ink. is nearly a few percent to over ten percent regardless of the color material being colorant or pigment. Further, the method of performing staining to the ink acceptance layer is the same as a typical staining method in that they are inferior in the light resistance or the like. While the use of pigment as a color material which is excellent in the light resistance may be conceivable in the method, pigment particles do not permeate into a porous layer in the acceptance layer, and therefore, the pigment accumulates on the surface, resulting in preventing staining to the acceptance layer. Further, in comparison with the direct coloring method, it is unfavorable in terms of the number of process and the material cost since the formation of the acceptance layer is required. In addition, as the direct staining method, there is a problem that swelling or blur at the acceptance layer when ink filling in, as well as density variations occur in the colored part due to a condition when ink drying.

Moreover, as a typical head employed in the conventional ink jet method, there are one which discharges drops by utilizing thermal energy, i.e., the so-called thermal ink jet head, and one which discharges drops by utilizing direct mode deformation of piezoelectric element, i.e., the so-called direct mode piezo head. These heads structurally have following problems.

The thermal ink jet head discharges ink under the pressure of bubbles generated by heating ink, whereby the physicality of ink is significantly restricted. Specifically, burning of ink at a heater part is liable to occur, and therefore, it is impossible to increase the solid content quantity in the ink. Further, since it is impossible to make the boiling point of ink high because rapid boiling is required, water is mainly employed for a solvent.

Subsequently, the direct mode piezo head has a wider range of available ink physicality than that of the thermal ink jet head. However, a measure for back stream protection is structurally needed to suppress flowing in the opposite direction of ink discharging, and thus there is a need to make a flow channel for supplying ink to an ink chamber be a complicated form. Thereby, there is a case in which ink supply is not overtaken for discharging ink including large quantity of solid content, i.e., ink of high viscosity, resulting in a decrease in discharge response or an aeration into the ink chamber occurred.

The present invention is made to solve the above-mentioned problems and has for its object to provide an art to manufacture a color filter substrate free from color mixture, decolorising, or color shade yieldingly by a simple process. A further object is to provide a color filter substrate manufactured by the above-described manufacturing method which is free from color mixture, decolorising, or color shade, and a liquid crystal element employing this color filter substrate which is low in cost, free from color shade, and excellent in display properties.

### DISCLOSURE OF THE INVENTION

A color filter manufacturing method according to a first aspect of the present invention comprises: a step of forming light shielding layer composed of resin composing material on a transparent substrate; a step of forming the light shielding layer into light-resistant frames which partition a plurality of ink filling areas; and a step of filling the respective ink filling areas with ink of a prescribed color having different spectral characteristics by an ink jet head, and in this method, the ratio of solid content in the ink is 20 weight percent or more.

Thereby, change of ink volumes when ink is discharged and when ink is dried can be considerably reduced as compared with the ink employed in the conventional ink jet method, and therefore the form of the ink meniscus formed when ink fills the light-resistant frames which partition the ink filling area is stabilized and the uniformity of the colored layer thickness is enhanced, whereby a color filter free of color mixture into a neighboring pixel, decolorising, and color shade can be manufactured.

According to a second aspect of the invention, in the color filter manufacturing method as described in Claim 1, the ratio of solid content in the ink is 30 to 80 weight percent.

Thereby, change of ink volumes when ink is discharged and when ink is dried can be reduced further, and therefore the form of the ink meniscus is stabilized further, the uniformity of the colored layer thickness is enhanced further, and the ink discharge response while ink fills in is stabilized, whereby a color filter further free of color shade can be manufactured.

According to a third aspect of the invention, in the color filter manufacturing method as described in Claim 1, the ratio of solid content in the ink is 40 to 60 weight percent.

Therefore, the stability of the ink meniscus form, the uniformity of the colored layer thickness, and the ink discharge response are best-balanced, whereby a color filter having stable color characteristics can be manufactured.

A color filter manufacturing method according to a fourth aspect of the present invention comprises: a step of forming light shielding layer composed of resin composing material on a transparent substrate; a step of forming the light shielding layer into light-resistant frames which partition a plurality of ink filling areas; and a step of filling the respective ink filling areas with ink of a prescribed color having different spectral characteristics by an ink jet head, and in this method, the boiling point of solvent of the ink is 140°C or more.

Thereby, time for drying and solidifying of ink on the nozzle surface of the ink jet head can be made longer compared with the ink employed in the conventional ink jet method, and therefore bad discharge such as ink discharge curve and clogging due to ink dried at nozzle parts of the ink jet head is decreased, thereby manufacturing a color filter free of decolorising or color shade.

According to a fifth aspect of the invention, in the color filter manufacturing method as described in Claim 4, the boiling point of the solvent is 170°C or more.

Thereby, time for drying and solidifying of ink on the nozzle surface of the ink jet head can be made considerably longer compared with the ink employed in the conventional ink jet method, and therefore bad discharge such as ink discharge curve and clogging due to ink dried at nozzle parts of the ink jet head is decreased further, thereby manufacturing a color filter free of decolorising or color shade.

A color filter manufacturing method according to a sixth aspect of the present invention comprises: a step of forming light shielding layer composed of resin composing material on a transparent substrate; a step of forming the light shielding layer into light-resistant frames which partition a plurality of ink filling areas; and a step of filling in the respective ink filling areas with ink of a prescribed color having different spectral characteristics by an ink jet head, and in this method, the ink includes two or more kinds of solvents each having different boiling point.

Thereby, solvents are gradually evaporated and decreased for respective kinds when ink is solidified, and therefore the uniformity of the colored layer is enhanced, whereby a color filter free of color shade can be manufactured.

According to a seventh aspect of the invention, in the color filter manufacturing method as described in Claim 6, the solvent includes at least one or more kind of solvent having the boiling point of 140°C or more.

Thereby, time for drying and solidifying of ink on the nozzle surface of the ink jet head can be made longer compared with the ink employed in the conventional ink jet method, and therefore bad discharge such as ink discharge curve and clogging due to ink dried at nozzle parts of the ink jet head is decreased, and the uniformity of the colored layer thickness is enhanced because the solvents are gradually evaporated and decreased for respective kinds when ink is solidified, whereby a color filter free of decolorising or color shade can be manufactured.

According to an eighth aspect of the invention, in the color filter manufacturing method as described in Claim 6, the solvent includes at least one or more kind of solvent having the boiling point of 170°C or more.

Thereby, time for drying and solidifying of ink on the nozzle surface of the ink jet head can be made considerably longer compared with the ink employed in the conventional ink jet method, and therefore bad discharge such as ink discharge curve and clogging due to ink dried at nozzle parts of the ink jet head is decreased further, and the uniformity of the colored layer thickness is enhanced because the solvents are gradually evaporated and decreased for respective kinds when ink is solidified, whereby a color filter free of decolorising or color shade can be manufactured.

A color filter manufacturing method according to a ninth aspect of the present invention comprises: a step of forming light shielding layer composed of resin composing material on a transparent substrate; a step of forming the light shielding layer into light-resistant frames which partition a plurality of ink filling areas; and a step of filling in the respective ink filling areas with ink of a prescribed color having different spectral characteristics by an ink jet head, and in this method, the ink includes oil solvent, pigment, and light cured resin, as well as the weight ratio of light cured resin to pigment is twofold or more.

Therefore, a reliable color filter excellent in adhesion between the colored layer and the substrate can be manufactured.

A color filter manufacturing method according to a tenth aspect of the present invention comprises: a step of forming light shielding layer composed of resin composing material on a transparent substrate; a step of forming the light shielding layer into light-resistant frames which partition a plurality of ink filling areas; a step of filling in the respective ink filling areas with ink of a prescribed color having different spectral characteristics by an ink jet head, and a step of solidifying the ink which filled in, and in this method, volume of the ink when filling in is not more than five times as large as volume of ink after being dried and solidified.

Thereby, change of ink volumes when ink is discharged and when ink is dried can be considerably reduced compared with the ink employed in the conventional ink jet method, and therefore the form of ink meniscus formed when the light-resistant frames partitioning the ink filling area are filled with ink is stabilized and the uniformity of the colored layer thickness is enhanced, whereby a color filter free of color mixture into a neighboring pixel, decolorising, or color shade can be manufactured.

A color filter manufacturing method according to an eleventh aspect of the present invention comprises: a step of forming light shielding layer composed of resin composing material on a transparent substrate; a step of forming the light shielding layer into light-resistant frames which partition a plurality of ink filling areas; a step of filling in the respective ink filling areas with ink of a prescribed color having different spectral characteristics by an ink jet head; and a step of solidifying the ink which filled in, and in this method, the height of the light-resistant frames is 1 to 4µm and the difference between the height of the light-resistant frames and that of the ink after solidification is 0.5µm or below.

Therefore, difference in level between the light-resistant frames and the colored layer is reduced, and thus the flatness is increased, thereby manufacturing a color filter free of color shade.

According to a twelfth aspect of the invention, in the color filter manufacturing method as described in any of Claims 1, 10, or 11, solvent of the ink is oil solvent.

Therefore, the solubility for resin is higher than that of water-based solvent, whereby ink having higher solid content ratio can be prepared.

According to a thirteenth aspect of the invention, in the color filter manufacturing method as described in any of Claims 1, 4, 6, 10, or 11, the ink includes pigment.

Therefore, a color filter having excellent resistances to weather, light, and heat, as well as hygroscopicity can be manufactured.

According to a fourteenth aspect of the invention, in the color filter manufacturing method as described in any of Claims 1, 4, 6, 10, or 11, the ink includes light cured resin.

Therefore, a color filter excellent in color tone, uniformity of the colored layer thickness, adhesion to the substrate, and working property after evaporation and solidification of the solvent can be manufactured.

According to a fifteenth aspect of the invention, in the color filter manufacturing method as described in any of Claims 1, 4, 6, 9, 10, or 11, the light shielding layer has ink repellency.

Therefore, variations of the spotting accuracy of the ink jet head and an error of the ink fill are reduced, whereby a color filter free of color mixture or decolorising can be manufactured.

According to a sixteenth aspect of the invention, in the color filter manufacturing method as described in Claim 15, the light shielding layer is composed of resin composing material which develops ink repellency by being heated, and the light shielding layer is heated after the formation of the light-resistant frames.

Therefore, the light shielding layer before heating sticks fast to the substrate because it fits the substrate without showing ink repellency and the light shielding layer after heating shows high ink repellency, thereby manufacturing a color filter free of peeling between the substrate and the light shielding layer, and color mixture or decolorising of the colored layer.

According to a seventeenth aspect of the invention, in the color filter manufacturing method as described in Claim 15, the light shielding layer is composed of one-ply resin layer having light shielding effect and ink repellency.

Therefore, a color filter can be manufactured by a simple process at a low cost.

According to an eighteenth aspect of the invention, in the color filter manufacturing method as described in Claim 15, the light shielding layer is composed of two-ply resin layers one having light shielding effect and the other having ink repellency.

Therefore, ink fits and sticks fast to the light shielding layer having no ink repellency, whereby a color filter free of decolorising can be manufactured.

According to a nineteenth aspect of the invention, in the color filter manufacturing method as described in any of Claims 1, 4, 6, 10, or 11, the color filter manufacturing method as described in any of Claims 1, 4, 6, 10, or 11, wherein energy generation element of the ink jet head is piezo type element employing piezoelectric element.

Therefore, the physicality range of ink to be used can be enlarged.

According to a twentieth aspect of the invention, in the color filter manufacturing method as described in Claim 19, an energy generation element of the ink jet head is a piezo type element employing a piezoelectric element of shear mode deformation type.

Therefore, the driving force is larger than that of the conventional thermal ink jet head or direct mode piezo head, whereby ink having high solid content ratio, i.e., high viscosity can be discharged.

According to a twenty-first aspect of the invention, in the color filter manufacturing method as described in Claim 19, the ink jet head has a structure in which ink discharge nozzles, pressure chambers connected to the ink discharge nozzles so as to supply the ink thereto, and shear mode actuator having piezoelectric material and electrodes to apply an electric field to the piezoelectric material are provided, and the shear node actuator is deformed in shear mode in a direction of the electric field by the electric field applied between the electrodes so as to increase pressure of ink in the pressure chambers.

Therefore, flow of ink is smooth because the form of ink flow channel and the mode of ink supply to the ink flow channel are simple, and very large driving force can be generated since pressure is generated by the entire side wall of the flow channel, whereby ink having high solid content ratio, i.e., high viscosity can be discharged.

A color filter according to a twenty-second aspect of the present invention is manufactured by the color filter manufacturing methods as described in any of Claims 1, 4, 6, 9, 10, 11, or 19.

Therefore, a color filter free of color mixture, decolorising, or color shade can be obtained.

According to a twenty-third aspect of the invention, in the color filter as described in Claim 22, a protective layer is provided on the color filter.

Therefore, the colored layer is protected as well as further flattening of the color filter surface can be realized.

A liquid crystal element according to a twenty-fourth aspect of the present invention comprises a pair of substrates and a liquid crystal held in between, and in this liquid crystal element, one of the pair of substrates is constructed employing the color filter as described in Claim 22.

Therefore, a liquid crystal element free of color mixture, decolorising, or color shade can be obtained.

### BRIEF DESCRIPTION OF DRAWINGS

Figure 1 is a manufacturing process chart of a color filter according to the present invention.

Figure 2(a) is a sectional view illustrating a color filter in a normal state for explaining a color filter manufacturing method according to the present invention. Figure 2(b) is a sectional view illustrating the color filter in a state where color mixture occurs.

Figure 3 is a diagram showing the relationship between solid content ratio and viscosity of ink for explaining the color filter manufacturing method according to the present invention.

Figure 4 is a diagram showing the relationship between solid content ratio of ink and head response frequency for explaining the color filter manufacturing method according to the present invention.

Figure 5 is a diagram showing the relationship between film thickness of a light shielding layer and optical density for explaining the color filter manufacturing method according to the present invention.

Figure 6 is an oblique perspective view illustrating the construction of an ink jet head employed in the color filter manufacturing method according to the present invention.

Figure 7 is a sectional view illustrating the construction of the ink jet head employed in the color filter manufacturing method according to the present invention.

Figure 8 is a diagram showing the relationship between solid content ratio of ink and film thickness of a colored layer in a color filter obtained by the color filter manufacturing method according to the present invention.

Figure 9 is a diagram showing the relationship among weight ratio of light cured resin to pigment, film thickness of the colored layer, and peeling of the colored filter obtained by the color filter manufacturing method according to the present invention.

Figure 10 is a sectional view illustrating the structure of a liquid crystal element employing the color filter obtained by the color filter manufacturing method according to the present invention.

### BEST MODE TO EXECUTE THE INVENTION

Hereinafter, embodiments of the present invention will be described with reference to figures. The embodiments described here are to be regarded only as illustrative and not as restrictive.

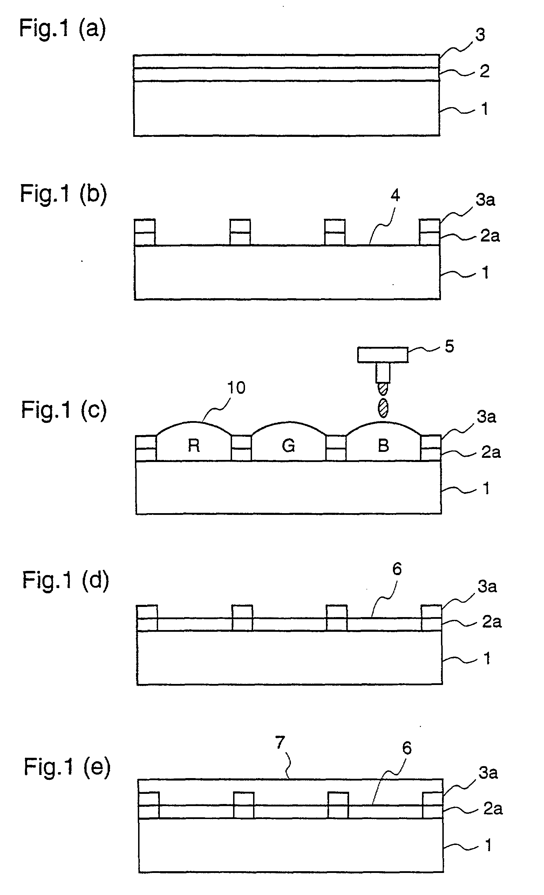

Hereinafter, a manufacturing process of a color filter according to the embodiments of the present invention will be described with reference to figure 1. The color filter manufactured by the process shown in figure 1 comprises three colors of red(R), green(G), and blue(B) and enables full color display by being set in a liquid crystal display element.

First, as shown in figure 1 (a) , a black resist layer 2 is formed on a substrate 1 of transparent non-alkali glass with its surface polished. The black resist layer 2 is a novolak resin negative resist to which black organic pigment or the like is dispersed, and is formed to attain 1µm of thickness by spin coat. This black resist layer 2 has light shielding effect.

Subsequently, the novolak resin negative resist layer 3 is formed on the black resist layer 2 to attain a thickness of 1µm by spin coat. This negative resist (JSR's NFR 012R) is added fluorochemical modifier (Dainippon Ink And Chemicals, Incorporated's DEFENSA MCF-323) of ten weight percent so as to attain ink repellency.

As shown in figure 1(b), the black resist layer 2 and the negative resist layer 3 are patterned together into prescribed frames 2a and 3a, respectively by a well-known photolithography method comprising ultraviolet exposure, development, rinsing, or the like. The frames 2a and 3a partition an ink filling area 4 according to types of the color filter, i.e., forms of respective colors or an alignment. Since the black resist layer 2 has the light shielding effect and the negative resist layer 3 has the ink repellency, the frames 2a and 3a also have the light shielding effect and the ink repellency, respectively. Therefore, the frames 2a and 3a function as a black matrix and as a color mixture protection wall for preventing ink filling in from spilling over the neighboring ink filling area 4. Further, the black resist layer and the negative resist layer may be formed individually according to need, and a single-layer structure in which the fluorochemical modifier is added into the black resist layer is also possible as long as light shielding effect, ink repellency, and adhesion to the substrate are satisfied.

When the ink filling area 4 is formed as described above, red ink R, green ink G, or blue ink B fills in the ink filling area 4 as shown in figure 1 (c) . This process is performed by the ink jet method, in which ink is discharged from an ink jet head 5 located opposed to the ink filling area 4. A nozzle hole of the ink jet head 5 is approximately φ 30µm.

When all the ink filling areas 4 are filled with ink, heat treatment is performed at 100 degrees for about thirty minutes to evaporate solvent of ink, and further, ultraviolet irradiation is performed in a nitrogen atmosphere employing metal halide lamp so as to solidify solid content in ink as shown in figure 1(d).

Subsequently, a transparent protective layer 7 is formed on a colored layer 6 by spin coat as shown in figure 1(e). This protective layer 7 is formed according to need to protect the colored layer 6 as a solidification layer of ink R, G, and B as well as to make the surface flat. Further, the protective layer 7 may not be created if unnecessary, thereby reducing cost as well as simplifying the manufacturing process.

It has been proved that when the colored layer is formed directly on the substrate employing the ink jet method, the variation in ink thickness before and after ink is dried, i.e., the solid content ratio is an important factor which exerts an influence on color characteristics of the color filter.

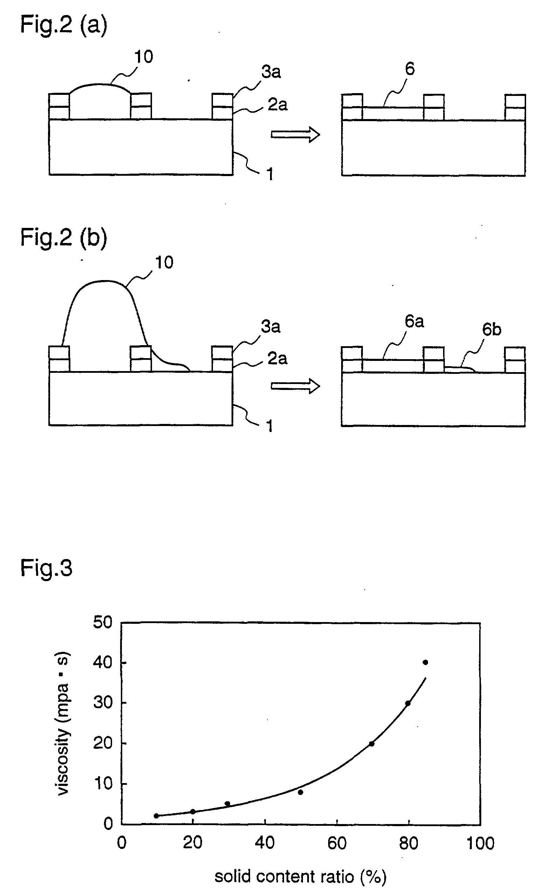

When the ratio of solid content in ink is 20% or more, ink meniscus formed at the boundaries between the light- resistant frames and ink is stabilized, and ink 10 is held by the frames 2a and 3a as shown in a left diagram of figure 2(a). When ink is dried and solidified, the prescribed colored layer 6 is formed as shown in a right diagram of figure 2(b), resulting in a color filter being free from color mixture or color shade and having stable color characteristics. However, when the ratio of solid content in ink is under 20%, the ink meniscus formed at the boundaries between the light-resistant frames and ink is unstable. For example, the ink 10 flows into a neighboring ink filling area over the frames 2a and 3a as shown in a left diagram of figure 2(b), and after ink being dried and solidified, a colored layer 6b is formed in addition to a prescribed colored layer 6a as shown in a right diagram of figure 2(b), resulting in a cause of color mixture. Also, the fill in the prescribed colored layer 6a is decreased, thereby causing color mixture. While there is described a case where drying and solidification is performed without filling in the neighboring ink filling area with ink, in a case where the neighboring area is filled with ink, color mixture occurs when a different color is employed and color shade due to the fill change occurs when a same color is employed.

Therefore, as ink discharged from the ink jet head, one having 20 weight percent or more of the solid content ratio is employed in the embodiments. Thereby, a color filter being free from color mixture or color shade and having stable color characteristics can be obtained.

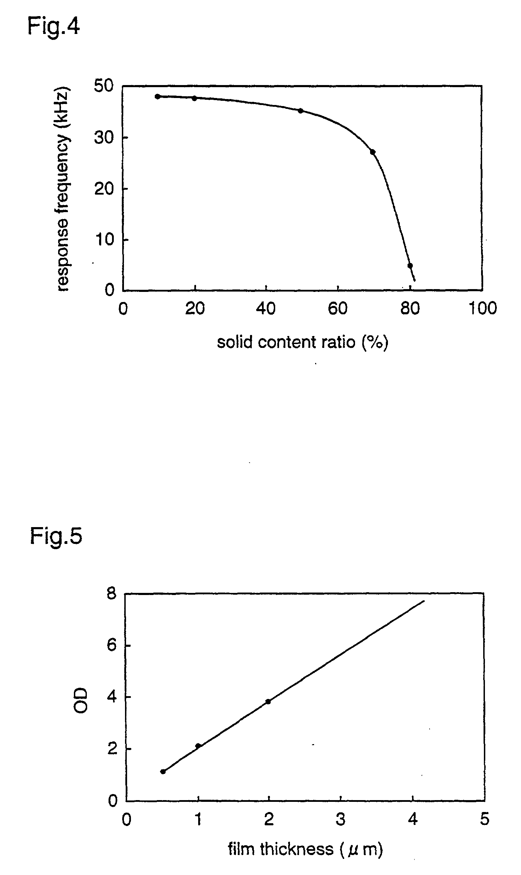

Further, the relationship between solid content ratio and viscosity of ink shows a tendency as described in figure 3. When the solid content ratio is 30% or more, the viscosity is about 5mPa·s or more, resulting in a further improvement in the stability of the ink meniscus. Meanwhile when the solid content ratio is over 80%, the viscosity is over 30mPa·s. As illustrated by the relationship between solid content ratio and response frequency of ink shown in figure 4, when the solid content ratio is over 80%, that is, the viscosity is over 30mPa·s, the response frequency is 4kHz or less, resulting in a decrease in driving speed of the ink jet head. As described above, 30-80 weight percent is favorable as the solid content ratio which is excellent in stability of the ink meniscus form and ink discharge response. Further, more preferable solid content ratio is 40-60 weight percent, considering a balance among uniformity of thickness of the colored layer after ink being dried and solidified, speed and stability of the ink discharge response, and the like. In addition, ink is preferably a highly-penetrative oil solvent to prevent decolorising in the ink filling area 4.

Further, in the present invention, the ratio of solid content in ink is high, whereby change of volumes when ink fills in and after ink is dried and solidified can be considerably reduced as compared with the conventional method. Accordingly, difference between the height of the light-resistant frames and that of the colored layer can be remarkably decreased as compared with the conventional method. Specifically, the height of the light-resistant frames can be set to from 1µm through 4µm arbitrarily according to a required density, i.e., thickness of the colored layer, and difference between the height of the light-resistant frames and that of ink after solidification can be 0.5µm or below. The relationship between film thickness of the light-resistant frames and optical density will be described in figure 5. When the film thickness is under 1µm, the optical density is 2 or below, whereby it is not suited for practical use. Further, when the film thickness is over 4µm, there lacks in patterning properties of resist resin which forms the light-resistant frames, whereby it is not suited for practical use.

In addition, also in a case where the ratio of ink volume filling in the light-resist frames to ink volume after ink being dried and solidified is fivefold or less, the ink meniscus formed at the boundaries between the light-resistant frames and ink is stabilized, thereby achieving a color filter having stable color characteristics and being free of color mixture and color shade, as shown in the description of figure 2.

Further, pigment is preferable as a color material in ink considering the resistances to weather, light, and heat, as well as the hygroscopicity. As a pigment to be used, publicly known organic or inorganic pigment of azo pigment such as azo lake, insoluble azo pigment, condensation azo pigment, and chelate azo pigment, pigment of polycyclic pigment such as phthalocyanine pigment, perylene pigment, perynone pigment, anthraquinone pigment, quinacridone pigment, dioxagine pigment, thioindigo pigment, isoinsorinon pigment, and quinophthalone pigment, pigment of organic pigment such as basic dye lake, acid dye lake, nitro pigment, nitroso pigment, and aniline black, pigment of inorganic pigment such as titanium oxide, iron oxide, and carbon black, or the like, for example, may be used singly or two or more kinds of which being combined, unrestrictedly.

Moreover, it is preferable that ink includes light cured resin in terms of adjustment of color tone after evaporation and drying of solvent, as well as improvement in uniformity and adhesion of the colored layer and in workability. As a light cured resin to be used, publicly known acrylic ester such as 2-hydroxyethyl acrylate, 2-hydroxypropyl acrylate, 2-ethyl hexyl acrylate, ethylene glycol diacrylate, diethylene glycol diacrylate, triethylene glycol methacrylate, tetramethylene glycol diacrylate, tetraethylene glycol diacrylate, trimethylolpropane triacrylate, pentaerythritol diacrylate, dipentaerythritol tetraacrylate, dipentaerythritol hexaacrylate, glycerol acrylate, bisphenol epoxydiacrylate may be used singly or two or more kinds of which being combined, unrestrictedly.

Further, it is preferable that ink includes oil solvent, pigment, and light cured resin as well as that the weight ratio of the light cured resin to the pigment is twofold or more. When the weight ratio is under twofold, pigment content which does not relate to the adhesion between the substrate and the colored layer is too much, and therefore, the adhesion strength is decreased, resulting in a case where peeling of the colored layer, that is, deocolorising is occurred.

Moreover, in order to decrease bad discharge due to drying and clogging on the nozzle surface of the ink jet head to perform stable discharge, the solvent to be used is preferably one that can dissolve or disperse the light cured resin. As a solvent to be used, in terms of superiority in dispersibility, publicly known organic solvent of ester such as ethyl acetate and butyl acetate, solvent of ketone such as cyclohexanone and ethyl butyl ketone, solvent of polyhydric alcohol derivative such as ethylene glycol monoethyl ether acetate and propylene glycol monomethyl ether, and solvent of nitrogenous solvent such as dimethylformamide, for example, may be used singly or two or more kinds of which being combined.

Further, in order to perform more stable discharge, it is desirable that the boiling point of the solvent of ink is 140°C or more, and more desirably, 170°C or more. As a solvent having the boiling point of 140°C or more, there are pentyl acetate, isopenthyl acetate, 2-methoxyethyl acetate, 2-ethoxyethyl acetate, 2-ethyl buthyl acetate, or the like, and as a solvent having the boiling point of 170°C or more, there are methyl acetoacetate, ethyl acetoacetate, cyclohexyl acetate, 3-methoxyl buthyl acetate, ethylene glycol monoacetate, or the like. The nozzle hole of the ink jet head 5 is very small as described above, and at this small part ink is liable to evaporate rapidly, and thus bad discharge due to drying and clogging on the nozzle surface is prone to occur. Specifically, this is notable in a solvent having the boiling point of nearly 100°C, and bad discharge occurs in a few seconds. In case of a solvent having the boiling point of 140°C or more, discharge is stabilized for 1 minute or more, and further, in case of a solvent having the boiling point of 170°C or more, discharge is stabilized for 5 minutes or more. However, in case of a solvent having the boiling point of 200°C or 250°C, when the drying and solidification temperature is set to the boiling point or more, the color material changes in quality due to high temperature, and when the drying and solidification temperature is set to the boiling point or below, it takes too much time for drying and solidification, resulting in a bad productivity.

In addition, in order to improve the flatness and the film thickness of the colored layer further, it is preferable that ink includes two or more kinds of solvents each having different boiling point. Rapid evaporation of the solvent causes rapid volume change of the ink meniscus held by the light-resistant frames, thereby forming a distorted colored layer with uneven surface. By employing solvents each having different boiling point, the solvents decrease gradually when ink is dried and solidified, whereby the flatness of the colored layer is enhanced and a color filter free of color shade can be manufactured.

Further, the frames partitioning the ink filling area 4 are formed by a resin composing material. The frames have the light shielding effect and function as party walls for preventing ink which fills in from flowing out into the neighboring ink filling area. In the color filter manufacturing method according to the embodiments, while it is not necessarily required to subject the frames to ink-repellent processing since the ink fill can be considerably reduced as compared with the conventional ink jet method, it is preferable that the light shielding layer has ink repellency for the freedom of ink choice and for reducing variations of the spotting accuracy of the ink jet head 5. Further, either of the light shielding layers can be employed, one that is composed of one resin layer having the light shielding effect and the ink repellency, or one that is composed of two resin layers one having the light shielding effect and the other having the ink repellency. Further, while as a method for ink-repellent processing of the frames, a method of making the fluorochemical modifier included in the frames is typical, for example, this is not to be regarded as restrictive, and any methods which make the critical surface tension of the frames smaller than the surface tension of ink can be employed. Specifically, when an additive such as fluoride derivative of quaternary ammonium salt which makes oil-repellent group oriented or deposited on the surface of the light shielding layer by heat treatment is employed as the fluorochemical modifier, and heating is performed after the formation of the light shielding layer, the light shielding layer sticks fast to the substrate before heating and the ink repellency is developed after heating, whereby peeling of the light shielding layer or color mixture and decolorising of the colored layer do not occur. This fluorochemical modifier is more preferable in one-ply light shielding layer.

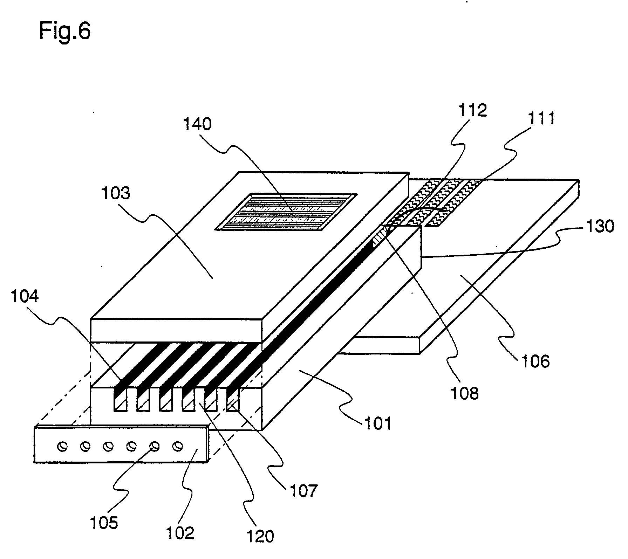

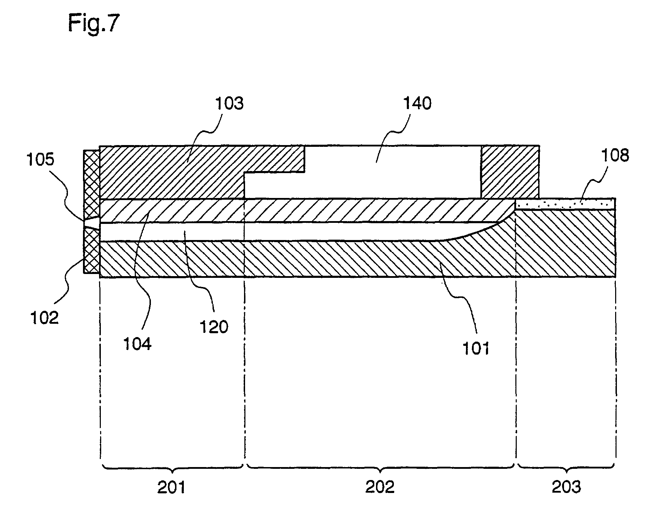

Figure 6 is an oblique perspective view illustrating the construction of an ink jet head employed in the embodiments. Figure 7 is a sectional view illustrating the construction of this ink jet head.

The ink jet head used in the embodiments is piezo-type employing piezoelectric element, and comprises an actuator substrate 101 composed of piezoelectric ceramics as the piezoelectric element, a cover plate 103 composed of ceramics material, resin material, or the like, a nozzle plate 102, and a driver substrate 106.

In the actuator substrate 101, plural pressure chambers 107 as flow channels for ink are formed. While respective pressure chambers 107 are in parallel and have same groove depths, the groove depths gradually become shallower toward a back end surface 130 of the actuator substrate 101, and a wire bond area 203 is formed around the back end surface 130. A side wall 120 of the pressure chamber 107 is subjected to poling process in a direction of the groove depth, and functions as a shear mode actuator employing a driving electrode 104 provided at the upper half of the both side surfaces thereof. Further, also in the wire bond area 203, an external electrode 108 is formed on the side surface and the bottom surface. That is, the driving electrode 104 formed on the both side surfaces of the side wall 120 is electrically connected with the external electrode 108 formed in the wire bond area 203.

In the cover plate 103, an ink supply port 140 is formed. While in above-described figure 6, a filter is attached to the ink supply port 140, it is arbitrary whether to attach the filter or not.

Further, a nozzle plate 102 having nozzles 105 which correspond to respective pressure chambers 107 is joined to the forward end surface of the actuator substrate 101 and the cover plate 103.

The pressure chamber 107 comprises a pressure chamber area 201 in which the top surface of the actuator substrate 101 and the cover plate 103 are joined together, a manifold area 202 in which the ink supply port 140 and the pressure chamber 107 are communicated with each other, and the above-described wire bond area 203. Ink passes through the manifold area 202 of all the pressure chambers 107 from the ink supply port 14 so as to fill in the pressure chamber area 201.

A driver substrate 106 is joined to the rear surface of the actuator substrate 101, that is, the surface opposite to the side where the chambers 107 are formed, and terminal electrodes 111 which correspond one-to-one to the respective external electrodes 108 are formed in the driver substrate 106. The terminal electrode 111 and the external electrode 108 are connected by a bonding wire 112, and the terminal electrode 111 is connected with an output terminal of a driver IC not shown.

Next, the operation of the ink jet head 5 will be described. When an electric field is applied to the driving electrode 104 from the driver IC through the external electrode 108, the side wall 120 causes a deformation of the shear mode in an array direction, and the ink pressure in the pressure chamber 107 is increased, thereby discharging ink drops from the nozzle 105.

The ink jet head according to the present invention is constructed such that the both sides of the side wall of the pressure chamber serving as an ink flow channel perform shear deformation so as to apply a pressure wave to ink which fills in the flow channel, thereby discharging ink from the ink discharge nozzles, which correspond to the ink flow channels, of the ink discharge plate joined to the end of the ink flow channels. Therefore, considerably high driving force can be generated because the pressure is generated by the entire side wall of the flow channel, and a smooth ink flow can be realized since the form of the ink flow channel and the mode of ink supply to the ink flow channel are simple, whereby this ink jet head is suited for the discharge of ink including large amount of solid content.

Further, in the present invention, it is also possible to use any kinds of piezo-type ink jet heads employing a piezoelectric element or other types of ink jet heads, in addition to the ink jet head used in the embodiments, as long as they have structures to discharge ink with high solid content ratio stably.

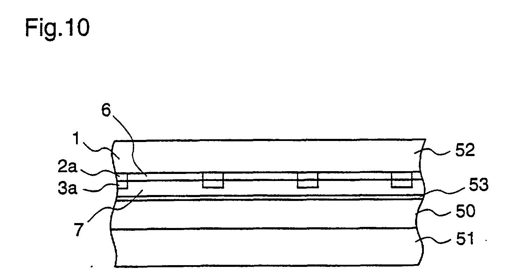

Figure 10 is a sectional view schematically illustrating the structure of a liquid crystal element obtained according to the embodiments. In the figure, the same reference numerals as those shown in figure 1 denote the same or corresponding parts. A liquid crystal layer 50 is held between a light transmitting substrate 51 and a color filter 52 formed by the manufacturing method of the embodiments. In the color filter 52, the protective layer 7 is located opposed to the liquid crystal layer 50, and a common electrode 53 composed of a transparent conductive film is provided between the protective layer 7 and the liquid crystal layer 50.

As described above, in the color filter manufacturing method according to the embodiments, which comprises a step of forming a light shielding layer composed of a resin composing material on a transparent substrate, a step of forming the light shielding layer into light-resistant frames which partition plural ink filling areas, and a step of filling in the respective ink filling areas with ink of a prescribed color having different spectral characteristics by an ink jet head, since the solid content ratio of the ink is 20 weight percent or more, change of ink volumes when ink is discharged and when ink is dried can be considerably reduced as compared with the ink employed in the conventional ink jet method, and therefore the form of the ink meniscus formed when ink fills in the light-resistant frames which partition the ink filling area is stabilized and the uniformity of the colored layer thickness is enhanced, whereby a color filter free of color mixture into a neighboring pixel, decolorising, and color shade can be manufactured.

Further, since the ratio of solid content in ink is 30 to 80 weight percent, change of ink volumes when ink is discharged and when ink is dried can be reduced further, and therefore the form of the ink meniscus is stabilized further, the uniformity of the colored layer thickness is enhanced further, and the ink discharge response while ink fills in is stabilized, whereby a color filter further free of color shade can be manufactured.

In addition, since the ratio of solid content in ink is 40 to 60 weight percent, the stability of the ink meniscus form, the uniformity of the colored layer thickness, and the ink discharge response are best-balanced, whereby a color filter having stable color characteristics can be manufactured.

Further, in the color filter manufacturing method according to the embodiments of the present invention, which comprises a step of forming a light shielding layer composed of a resin composing material on a transparent substrate, a step of forming the light shielding layer into light-resistant frames which partition plural ink filling areas, and a step of filling in the respective ink filling areas with ink of a prescribed color having different spectral characteristics by an ink jet head, since the boiling point of a solvent of the ink is 140°C or more, time for drying and solidifying of ink on the nozzle surface of the ink jet head can be made longer compared with the ink employed in the conventional ink jet method, and bad discharge such as ink discharge curve and clogging due to ink dried at nozzle parts of the ink jet head is decreased, thereby manufacturing a color filter free of decolorising or color shade.

In addition, since the boiling point of a solvent is 170°C or more, time for drying and solidifying of ink on the nozzle surface of the ink jet head can be made considerably longer compared with the ink employed in the conventional ink jet method, and therefore bad discharge such as ink discharge curve and clogging due to ink dried at nozzle parts of the ink jet head is decreased further, thereby manufacturing a color filter free of decolorising or color shade.

Further, in the color filter manufacturing method according to the embodiments, which comprises a step of forming a light shielding layer composed of a resin composing material on a transparent substrate, a step of forming the light shielding layer into light-resistant frames which partition plural ink filling areas, and a step of filling in the respective ink filling areas with ink of a prescribed color having different spectral characteristics by an ink jet head, since the ink includes two or more kinds of solvents each having different boiling point, the solvents are gradually evaporated and decreased for respective kinds when ink is solidified, and therefore the uniformity of the colored layer is enhanced, thereby manufacturing a color filter free of color shade.

Further, since the ink includes at least one or more solvents having the boiling points of 140°C or more, bad discharge such as ink discharge curve and clogging due to ink dried at nozzle parts of the ink jet head is decreased, and the uniformity of the colored layer thickness is enhanced because the solvents are gradually evaporated and decreased for respective kinds when ink is solidified, whereby a color filter free of decolorising or color shade can be manufactured.

Further, since the ink includes at least one or more solvents having the boiling points of 170°C or more, bad discharge such as ink discharge curve and clogging due to ink dried at nozzle parts of the ink jet head is decreased further, and the uniformity of the colored layer thickness is enhanced because the solvents are gradually evaporated and decreased for respective kinds when ink is solidified, whereby a color filter free of decolorising or color shade can be manufactured.

Further, in the color filter manufacturing method according to the embodiments of the present invention, which comprises a step of forming a light shielding layer composed of a resin composing material on a transparent substrate, a step of forming the light shielding layer into light-resistant frames which partition plural ink filling areas, and a step of filling in the respective ink filling areas with ink of a prescribed color having different spectral characteristics by an ink jet head, the ink includes oil solvent, pigment, and light cured resin and the weight ratio of the light cured resin to the pigment is twofold or more, whereby a reliable color filter in which the colored layer has an excellent adhesion to the substrate can be manufactured.

Further, in the color filter manufacturing method according to the embodiments, which comprises a step of forming a light shielding layer composed of a resin composing material on a transparent substrate, a step of forming the light shielding layer into light-resistant frames which partition plural ink filling areas, a step of filling in the respective ink filling areas with ink of a prescribed color having different spectral characteristics by an ink jet head, and a step of solidifying the ink filling in, since the volume of ink when filling in is not more than five times as large as the volume of ink after being dried and solidified, change of ink volumes when ink is discharged and when ink is dried can be considerably reduced compared with the ink employed in the conventional ink jet method, and therefore the form of ink meniscus formed when the light-resistant frames partitioning the ink filling area are filled with ink is stabilized and the uniformity of the colored layer thickness is enhanced, whereby a color filter free of color mixture into a neighboring pixel, decolorising, or color shade can be manufactured.

Further, in the color filter manufacturing method according to the embodiments, which comprises a step of forming a light shielding layer composed of a resin composing material on a transparent substrate, a step of forming the light shielding layer into light-resistant frames which partition plural ink filling areas, a step of filling in the respective ink filling areas with ink of a prescribed color having different spectral characteristics by an ink jet head, and a step of solidifying the ink filling in, since the height of the light-resistant frames is 1 to 4µm and the difference between the height of the light-resistant frames and that of the ink after solidification is 0.5µm or below, difference in level between the light-resistant frames and the colored layer is reduced, and thus the flatness is increased, thereby manufacturing a color filter free of color shade.

Further, a solvent of ink is oil-based, and its solubility for resin is higher than that of water-based solvent, whereby ink having higher solid content ratio can be prepared.

Further, ink includes pigment, thereby manufacturing a color filter having excellent resistances to weather, light, and heat, as well as hygroscopicity.

Further, ink includes light cured resin, whereby a color filter excellent in color tone, uniformity of the colored layer thickness, adhesion to the substrate, and working property after evaporation and solidification of the solvent can be manufactured.

Further, since the light shielding layer has ink repellency, variations of the spotting accuracy of the ink jet head and an error of the ink fill are reduced, whereby a color filter free of color mixture or decolorising can be manufactured.

Further, the light shielding layer is composed of a resin composing material which expresses ink repellency by heating, and the light shielding layer is heated after the formation of the light-resistant frames, and thus the light shielding layer before heating sticks fast to the substrate because it fits the substrate without showing ink repellency, and the light shielding layer after heating shows high ink repellency, thereby manufacturing a color filter free of peeling between the substrate and the light shielding layer, and color mixture or decolorising of the colored layer.

Further, the light shielding layer is composed of one-ply resin layer having light shielding effect and ink repellency, whereby a color filter can be manufactured by a simple process at a low cost.

Further, since the light shielding layer is composed of two-ply resin layers one having light shielding effect and the other having ink repellency, ink fits and sticks fast to the light shielding layer having no ink repellency, whereby a color filter free of decolorising can be manufactured.

Further, an energy generation element of the ink jet head is a piezo type element employing a piezoelectric element, thereby enlarging the physicality range of ink to be used.

Further, since the energy generation element of the ink jet head is a piezo type element employing a piezoelectric element of shear mode deformation type, the driving force is larger than that of the conventional thermal ink jet head or direct mode piezo head, whereby ink having high solid content ratio, i.e., high viscosity can be discharged.

Further, the ink jet head has such a structure in which ink discharge nozzles, pressure chambers connected to the ink discharge nozzles so as to supply the ink thereto, and a shear mode actuator in the pressure chamber having a piezoelectric material and electrodes to apply an electric field to the piezoelectric material are provided, and the shear node actuator is deformed in shear mode in a direction of the electric field by the electric field applied between the electrodes so as to increase pressure of ink in the pressure chambers, and therefore ink is discharged from the nozzles, whereby flow of ink is smooth because the form of ink flow channel and the mode of ink supply to the ink flow channel are simple, and very large driving force can be generated since pressure is generated by the entire side wall of the flow channel, and thus ink having high solid content ratio, i.e., high viscosity can be discharged.

Further, a color filter manufactured by the color filter manufacturing method according to the embodiments is favorable since it can be manufactured at a low cost, can obtain uniform color strength, is excellent in resistances to weather, light, and heat, as well as hygroscopicity, has higher ink adhesion to the substrate, has its colored filter protected, and has its surface flattened. In addition, a protective layer is provided on the color filter, whereby the colored layer is protected as well as further flattening of the color filter surface can be realized.

Further, in a liquid crystal element comprising a pair of substrates and a liquid crystal held in between, the color filter is employed as one substrate, thereby realizing a liquid crystal being low-cost, free of color shade, and having excellent display properties.

Hereinafter, first to ninth embodiments of the present invention will be described in more detail. Further, first to fourth comparative examples described below explain color filters manufactured in different methods from those of the present invention for comparing with the present invention.

### (Embodiment 1)

Composition of ink is made of pigment (6 weight%), light cured resin (acrylate resin, 12 weight%), dispersing agent (2 weight%), photopolyzation initiator (0.2 weight%), and solvent(propylene glycol monomethyl ether acetate), the ink jet head filled with RGB ink having solid content ratio of nearly 20 weight percent is operated at 4kHz of driving frequency (discharge of 4000 times per minute), and ink is discharged into the ink filling area between the light-resistant frames of 2µm high, thereby to manufacture a color filter. Ink drop number discharged is optimized previously for each color. Ink is dried and solidified, and the thickness of the colored layer formed is 1.9µm. In addition, the flatness of the colored layer surface is evaluated by a three dimensional surface structure analysis microscope (ZYGO's NEW VIEW 100), and it favorably results in 0.1µm or less in respective ink filling areas of respective colors. Further, no color mixture is found according to an observation by optical microscope.

### (Embodiment 2)

Composition of ink is made of pigment (10 weight%), light cured resin (acrylate resin, 18 weight%), dispersing agent (2 weight%), photopolyzation initiator (0.2 weight%), and solvent(propylene glycol monomethyl ether acetate), the solid content ratio is nearly 30 weight percent, and other manufacturing conditions are the same as those shown in the first embodiments, thereby to manufacture a color filter. Ink is dried and solidified, and the thickness of the colored layer formed is 1.9µm. In addition, the flatness of the colored layer surface is favorably 0.1µm or less in respective ink filling areas of respective colors. Further no color mixture is found according to an observation by optical microscope.

### (Embodiment 3)

Composition of ink is made of pigment (12 weight%), light cured resin (acrylate resin, 25 weight%), dispersing agent (3 weight%), photopolyzation initiator (0.3 weight%), and solvent(propylene glycol monomethyl ether acetate), the solid content ratio is nearly 40 weight percent, and other manufacturing conditions are the same as those shown in the first embodiments, thereby to manufacture a color filter. Ink is dried and solidified, and the thickness of the colored layer formed is 1.9µm. In addition, the flatness of the colored layer surface is favorably 0.1µm or less in respective ink filling areas of respective colors. Further no color mixture is found according to an observation by optical microscope.

### (Embodiment 4)

Composition of ink is made of pigment (16 weight%), light cured resin (acrylate resin, 31 weight%), dispersing agent (3 weight%), photopolyzation initiator (0.4 weight%), and solvent(propylene glycol monomethyl ether acetate), the solid content ratio is nearly 50 weight percent, and other manufacturing conditions are the same as those shown in the first embodiments, thereby to manufacture a color filter. Ink is dried and solidified, and the thickness of the colored layer formed is 1.9µm. In addition, the flatness of the colored layer surface is favorably 0.1µm or less in respective ink filling areas of respective colors. Further no color mixture is found according to an observation by optical microscope.

### (Embodiment 5)

Composition of ink is made of pigment (19 weight%), light cured resin (acrylate resin, 38 weight%), dispersing agent (3 weight%), photopolyzation initiator (0.4 weight%), and solvent(propylene glycol monomethyl ether acetate), the solid content ratio is nearly 60 weight percent, and other manufacturing conditions are the same as those shown in the first embodiments, thereby to manufacture a color filter. Ink is dried and solidified, and the thickness of the colored layer formed is 1.9µm. In addition, the flatness of the colored layer surface is favorably 0.1µm or less in respective ink filling areas of respective colors. Further no color mixture is found according to an observation by optical microscope.

### (Embodiment 6)

Composition of ink is made of pigment (25 weight%), light cured resin (acrylate resin, 50 weight%), dispersing agent (3 weight%), photopolyzation initiator (0.5 weight%), and solvent(propylene glycol monomethyl ether acetate), the solid content ratio is nearly 80 weight percent, and other manufacturing conditions are the same as those shown in the first embodiments, thereby to manufacture a color filter. Ink is dried and solidified, and the thickness of the colored layer formed is 1.9µm. In addition, the flatness of the colored layer surface is favorably 0.1µm or less in respective ink filling areas of respective colors. Further no color mixture is found according to an observation by optical microscope.

### (Comparative Example 1)

Composition of ink is made of pigment (1.5 weight%), light cured resin (acrylate resin, 3 weight%), dispersing agent (0.5 weight%), photopolyzation initiator (0.1 weight%), and solvent(propylene glycol monomethyl ether acetate), the solid content ratio is nearly 5 weight percent, and other manufacturing conditions are the same as those shown in the first embodiments, thereby to manufacture a color filter. Ink is dried and solidified, and the thickness of the colored layer formed is 1-1.5µm. In addition, the flatness of the colored layer surface is 0.5µm or more in respective ink filling areas of respective colors. Further color mixture is found according to an observation by optical microscope.

### (Comparative Example 2)

Composition of ink is made of pigment (3 weight%), light cured resin (acrylate resin, 6 weight%), dispersing agent (0.1 weight%), photopolyzation initiator (0.1 weight%), and solvent(propylene glycol monomethyl ether acetate), the solid content ratio is nearly 10 weight percent, and other manufacturing conditions are the same as those shown in the first embodiments, thereby to manufacture a color filter. Ink is dried and solidified, and the thickness of the colored layer formed is 1-1.5µm. In addition, the flatness of the colored layer surface is 0.5µm or more in respective ink filling areas of respective colors. Further color mixture is found according to an observation by optical microscope.

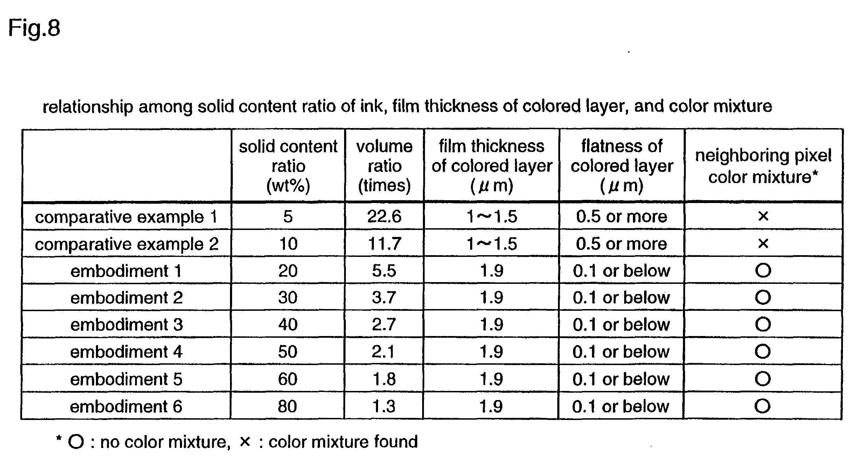

The relationship among the solid content ratio of ink, the film thickness of colored layer, and the color mixture occurrence is arranged in table and will be described in figure 8 with respect to the first to sixth embodiments and the first and second comparative examples. When the ratio of solid content in ink, that is, the weight ratio of pigment, light cured resin, dispersing agent, and photopolyzation initiator in all is 20% or more, the film thickness of the colored layer is 1.9µm, which is nearly as high as the light-resistant frames. Further, the flatness of the colored layer surface also indicates a preferable value of 0.1µm or below, and no color mixture into a neighboring pixel occurs.

Further, the volume ratio in figure 8 is a volume ratio of ink to the solid content which is converted from the solid content ratio based on the specific gravity of ink and the solid content. As illustrated in figure 8, the volume ratio of fivefold or less favorably results in that the film thickness and the flatness of the colored layer are excellent and no color mixture occurs.

### (Embodiment 7)

Composition of ink is made of pigment (10 weight%), light cured resin (acrylate resin, 30 weight%), dispersing agent (2 weight%), photopolyzation initiator (0.4 weight%), and solvent(propylene glycol monomethyl ether acetate), the weight ratio of the light cured resin to the pigment is threefold, and other manufacturing conditions are the same as those shown in the first embodiments, thereby to manufacture a color filter. Ink is dried and solidified, and the thickness of the colored layer formed is 1.9µm. In addition, the flatness of the colored layer surface is favorably 0,1µm or less in respective ink filling areas of respective colors. Further no peeling from the substrate is found in an observation of an adhesion state of the colored layer by optical microscope.

### (Embodiment 8)

Composition of ink is made of pigment (18 weight%), light cured resin (acrylate resin, 54 weight%), dispersing agent (3 weight%), photopolyzation initiator (0.5 weight%), and solvent(propylene glycol monomethyl ether acetate), the weight ratio of the light cured resin to the pigment is threefold, and other manufacturing conditions are the same as those shown in the first embodiments, thereby to manufacture a color filter. Ink is dried and solidified, and the thickness of the colored layer formed is 1.9µm. In addition, the flatness of the colored layer surface is favorably 0.1µm or less in respective ink filling areas of respective colors. Further no peeling from the substrate is found in an observation of an adhesion state of the colored layer by optical microscope.

### (Embodiment 9)

Composition of ink is made of pigment (10 weight%), light cured resin (acrylate resin, 40 weight%), dispersing agent (2 weight%), photopolyzation initiator (0.4 weight%), and solvent(propylene glycol monomethyl ether acetate), the weight ratio of the light cured resin to the pigment is fourfold, and other manufacturing conditions are the same as those shown in the first embodiments, thereby to manufacture a color filter. Ink is dried and solidified, and the thickness of the colored layer formed is 1.9µm. In addition, the flatness of the colored layer surface is favorably 0.1µm or less in respective ink filling areas of respective colors. Further no peeling from the substrate is found in an observation of an adhesion state of the colored layer by optical microscope.

### (Comparative Example 3)

Composition of ink is made of pigment (10 weight%), light cured resin (acrylate resin, 15 weight%), dispersing agent (2 weight%), photopolyzation initiator (0.2 weight%), and solvent(propylene glycol monomethyl ether acetate), the weight ratio of the light cured resin to the pigment is half times, and other manufacturing conditions are the same as those shown in the first embodiments, thereby to manufacture a color filter. Peeling from the substrate is found in an observation of an adhesion state of the colored layer by optical microscope. Further, with respect to the thickness and the flatness of the colored layer, reproducible result is not obtained due to the peeling of the colored layer.

### (Comparative Example 4)

Composition of ink is made of pigment (20 weight%), light cured resin (acrylate resin, 30 weight%), dispersing agent (3 weight%), photopolyzation initiator (0.4 weight%), and solvent(propylene glycol monomethyl ether acetate), the weight ratio of the light cured resin to the pigment is half times, and other manufacturing conditions are the same as those shown in the first embodiments, thereby to manufacture a color filter. Peeling from the substrate is found in an observation of an adhesion state of the colored layer by optical microscope. Further, with respect to the thickness and the flatness of the colored layer, reproducible result is not obtained due to the peeling of the colored layer.

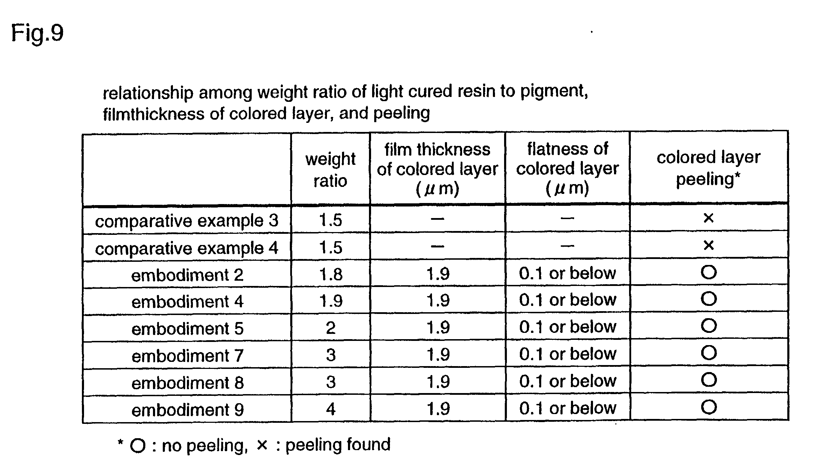

The relationship among the weight ratio of light cured resin to pigment, the film thickness of colored layer, and the peeling of the colored layer is arranged in table and will be described in figure 9 with respect to the above-described embodiments 2, 4, 5, 7-9, as well as comparative examples 3 and 4. When the weight ratio of light cured resin to pigment in ink is twofold or more, the film thickness of the colored layer is 1.9µm, which is nearly as high as the light-resistant frames. Further, the flatness of the colored layer surface also indicates a preferable value of 0.1µm or below, and no peeling of the colored layer from the glass substrate occurs.

Further, when a liquid crystal element into which the color filter manufactured in the above-described first to ninth embodiments is built is manufactured, a liquid crystal element excellent in color characteristics can be obtained.

### APPLICABILITY IN INDUSTRY

As described above, a color filter manufacturing method, a color filter, and a liquid crystal element according to the present invention are suited as a manufacturing method of a color filter employed in a color liquid crystal display, a liquid crystal element employed in the color liquid crystal display, and a color filter employed in the liquid crystal element and more particularly, are available as a manufacturing method for a low cost color filter employing an ink jet system in coloring process, a color filter, and a liquid crystal element.

## Claims

1. A color filter manufacturing method comprising:
step of forming light shielding layer composed of resin composing material on a transparent substrate;
step of forming the light shielding layer into light-resistant frames which partition a plurality of ink filling areas; and
step of filling in the respective ink filling areas with ink of a prescribed color having different spectral characteristics by an ink jet head, wherein
the ratio of solid content in the ink is 20 weight percent or more.

2. The color filter manufacturing method as described in Claim 1, wherein the ratio of solid content in the ink is 30 to 80 weight percent.

3. The color filter manufacturing method as described in Claim 1, wherein the ratio of solid content in the ink is 40 to 60 weight percent.

4. A color filter manufacturing method comprising:
step of forming light shielding layer composed of resin composing material on a transparent substrate;
step of forming the light shielding layer into light-resistant frames which partition a plurality of ink filling areas; and
step of filling in the respective ink filling areas with ink of a prescribed color having different spectral characteristics by an ink jet head, wherein
the boiling point of solvent of the ink is 140°C or more.

5. The color filter manufacturing method as described in Claim 4, wherein the boiling point of the solvent is 170°C or more.

6. A color filter manufacturing method comprising:
step of forming light shielding layer composed of resin composing material on a transparent substrate;
step of forming the light shielding layer into light-resistant frames which partition a plurality of ink filling areas; and
step of filling in the respective ink filling areas with ink of a prescribed color having different spectral characteristics by an ink jet head, wherein
the ink includes two or more kinds of solvents each having different boiling point.

7. The color filter manufacturing method as described in Claim 6, wherein the solvent includes at least one or more kind of solvent having the boiling point of 140°C or more.

8. The color filter manufacturing method as described in Claim 6, wherein the solvent includes at least one or more kind of solvent having the boiling point of 170°C or more.

9. A color filter manufacturing method comprising:
step of forming light shielding layer composed of resin composing material on a transparent substrate;
step of forming the light shielding layer into light-resistant frames which partition a plurality of ink filling areas; and
step of filling in the respective ink filling areas with ink of a prescribed color having different spectral characteristics by an ink jet head, wherein
the ink includes oil solvent, pigment, and light cured resin, as well as the weight ratio of light cured resin to pigment is twofold or more.

10. A color filter manufacturing method comprising:
step of forming light shielding layer composed of resin composing material on a transparent substrate;
step of forming the light shielding layer into light-resistant frames which partition a plurality of ink filling areas;
step of filling in the respective ink filling areas with ink of a prescribed color having different spectral characteristics by an ink jet head; and
step of solidifying the ink which filled in, wherein
volume of the ink when filling in is not more than five times as large as volume of ink after being dried and solidified

11. A color filter manufacturing method comprising:
step of forming light shielding layer composed of resin composing material on a transparent substrate;
step of forming the light shielding layer into light-resistant frames which partition a plurality of ink filling areas;
step of filling in the respective ink filling areas with ink of a prescribed color having different spectral characteristics by an ink jet head, and
step of solidifying the ink which filled in, wherein
the height of the light-resistant frames is 1 to 4µm and the difference between the height of the light-resistant frames and that of the ink after solidification is 0.5µm or below.

12. The color filter manufacturing method as described in any of Claims 1, 10, or 11, wherein solvent of the ink is oil solvent.

13. The color filter manufacturing method as described in any of Claims 1, 4, 6, 10, or 11, wherein the ink includes pigment.

14. The color filter manufacturing method as described in any of Claims 1, 4, 6, 10, or 11, wherein the ink includes light cured resin.

15. The color filter manufacturing method as described in any of Claims 1, 4, 6, 9, 10, or 11, wherein the light shielding layer has ink repellency.

16. The color filter manufacturing method as described in Claim 15, wherein the light shielding layer is composed of resin composing material which develops ink repellency by being heated, and the light shielding layer is heated after the formation of the light-resistant frames.

17. The color filter manufacturing method as described in Claim 15, wherein the light shielding layer is composed of one-ply resin layer having light shielding effect and ink repellency.

18. The color filter manufacturing method as described in Claim 15, wherein the light shielding layer is composed of two-ply resin layers one having light shielding effect and the other having ink repellency.

19. The color filter manufacturing method as described in any of Claims 1, 4, 6, 10, or 11, wherein the color filter manufacturing method as described in any of Claims 1, 4, 6, 10, or 11, wherein energy generation element of the ink jet head is piezo type element employing piezoelectric element.

20. The color filter manufacturing method as described in Claim 19, wherein energy generation element of the ink jet head is piezo type element employing piezoelectric element of shear mode deformation type.

21. The color filter manufacturing method as described in Claim 19, wherein the ink jet head has a structure in which ink discharge nozzles, pressure chambers connected to the ink discharge nozzles so as to supply the ink thereto, and shear mode actuator having piezoelectric material and electrodes to apply an electric field to the piezoelectric material are provided, and the shear node actuator is deformed in shear mode in a direction of the electric field by the electric field applied between the electrodes so as to increase pressure of ink in the pressure chambers.

22. A color filter manufactured by the color filter manufacturing methods as described in any of Claims 1, 4, 6, 9, 10, 11, or 19.

23. The color filter as described in Claim 22, wherein protective layer is provided on the color filter.

24. A liquid crystal element comprising a pair of substrates and a liquid crystal held in between, wherein one of the pair of substrates is constructed employing the color filter as described in Claim 22.
